# EUROPÄISCHE PATENTSCHRIFT

(11) **EP 1 946 816 B1**
(45) Veröffentlichungstag und Bekanntmachung des Hinweises auf die Patenterteilung: **04.08.2010**
(21) Anmeldenummer: 07024360.5
(22) Anmeldetag: 15.12.2007
(51) Int. Cl.: B01D 46/02

(54) **Produktfilter**
Product filter
Filtre de produit

(30) Priorität: 22.12.2006 DE 102006061329
(43) Veröffentlichungstag der Anmeldung: 23.07.2008
(73) Patentinhaber: HOSOKAWA ALPINE Aktiengesellschaft, 86199 Augsburg (DE)
(72) Erfinder: Born, Olaf, Dipl.-Ing., 86199 Augsburg (DE); Gammeltoft, Kim, Dipl.-Ing., 86199 Augsburg (DE); Gebel, Norbert, Dipl.-Ing, 86159 Augsburg (DE); Oberkirsch, Robert, Dipl.-Ing, 86163 Augsburg (DE)

(56) Entgegenhaltungen:
- DE-A1- 2 300 003
- DE-A1- 2 306 002
- DE-A1- 2 604 493
- DE-A1- 2 826 510

## Beschreibung

Die Erfindung betrifft einen abreinigbaren Produktfilter, der in einen Isolator integriert ist.

### Stand der Technik

Bei der Verarbeitung von toxischen, gesundheitsschädlichen Stoffen sowie Arzneimitteln werden die Maschinen und Apparate in einen Isolator eingebaut, der von der umgebenden Atmosphäre isoliert ist, um den Betreiber/Bediener vor der Exposition mit den erwähnten Stoffen zu schützen.

Filtervorrichtungen zum Abtrennen von Produkt aus einem Produktluftstrom sind beispielsweise aus der DE 19946310 C2 bekannt. Die Filter bestehen im Wesentlichen aus einem Gehäuse und sind durch einen Trennboden in einen oberen Reingasraum und in einen unteren Rohgasraum oder Produktraum aufgeteilt. In dem Trennboden sind Öffnungen vorgesehen in die Filterschläuche eingehängt werden. Die Filterschläuche sind zur Reingasseite offen und zur Rohgasseite geschlossen. Die Filterschläuche sind vorzugsweise aus textilem Gewebe. Zum Trennen von Produkt und Luftstrom wird der produktbeladene Luftstrom der Rohgasseite des Filters zugeführt, durchdringt die Filterschläuche wobei das Produkt auf den Schläuchen zurückgehalten wird und der gereinigte Luftstrom auf der Reingasseite abgeführt wird. Der Produktkuchen löst sich ab einer bestimmten Dicke vom Filter, wahlweise kann das Produkt auch durch Beaufschlagen der Filterschläuche von der Reingasseite mit Druckstößen abgereinigt werden.

DE 2604493 beschreibt einen flexiblen Filterschlauch, welcher von aussen nach innen durchströmt wird und welcher von einem flexiblen Filtermantel umgeben ist, der von innen nach nach aussen durchströmt wird.

Bei der Ausrüstung von Isolatoren mit verfahrenstechnischen Maschinen kann der Filter freistehend außerhalb des Isolators aufgebaut werden. Ein kontaminationsfreies Arbeiten ist dann nur im Isolator möglich. Beim Abdocken der Produktgebinde tritt eine unvermeidbare Staubbelastung in die Umgebung auf. Der Schutz des Bedieners während der Reinigung und Kontrolle des Filters ist nicht gegeben.

Der Produktfilter ist in den Isolator integriert. Da der Filter für die Reinigung zerlegt werden muss, ist dies nur für Filter geringer Höhe und damit kleinen Filterflächen möglich. Die Filtergröße ist hierbei aufgrund ergonomischer Gesichtspunkte limitiert, und reduziert die Laufzeit des Mahlprozesses. Im Isolator müsste Platz vorgesehen werden, damit das Filtergehäuse welches die Filterschläuche umgibt, zur Reinigung entfernt werden kann. Außerdem kommt es zu Stillstandszeiten, wenn Filterschläuche ausgetauscht oder der Filter gereinigt werden muss.

Der Erfindung liegt die Aufgabe zu Grunde, ein Produktfilter für verfahrenstechnische Prozesse in einem Isolator bereitzustellen, welcher den Betreiber/Bediener bei der Produktausschleusung und der Filterreinigung vor der Exposition von toxischen, gesundheitsschädlichen Stoffen schützt. Außerdem soll er ein kontinuierliches Abreinigen des Filters während des verfahrenstechnischen Prozesses ermöglichen und die Produktverlustmenge minimieren.

Die Aufgabe wird dadurch gelöst, das die Filtereinheit als Filterkammer ausgeführt ist und das Filtergehäuse teilweise durch einen flexiblen Filtermantel ersetzt ist, welcher eine zusätzlich Filterfläche zu den Filterschläuchen darstellt.

### Beschreibung der Erfindung

Der Produktfilter ist ein integraler Bestandteil des Isolators. Im Isolator wird eine separate sogenannte Filterkammer installiert, welche die äußere Wand des Filters darstellt, d.h. das Gehäuse. Innerhalb dieser Kammer ist der Filterkopf, in welchen die Filterschläuche mit Stützkorb eingesetzt werden, angeordnet. Im unteren Bereich der Kammer fluchtend zum Filterkopf ist ein Filterstutzen angeordnet, der im Isolator weitergeführt wird und an den Filterkonus und Produktbehälter angeschlossen ist. Um die Filterschläuche zwischen Filterkopf und Filterstutzen wird ein Filtermantel installiert. Er stellt zusätzliche Filterfläche dar. Die Filterschläuche werden von außen nach innen durchströmt und halten das Produkt auf ihrer äußeren Seite zurück. Der Filtermantel wird von innen nach außen durchströmt und hält das Produkt auf dessen Innenseite zurück. Die Rohgasseite oder Produktseite wird durch den Bereich innerhalb des Filtermantels und außerhalb der Filterschläuche dargestellt. Die Reingasseite befindet sich in der Filterkammer. Die regelmäßige Abreinigung des Filters, wie es bei kontinuierlich arbeitenden Prozessen notwendig ist, erfolgt auch hier wie bei den bekannten Produktfiltern über Druckstöße. Ein Rohrleitungssystem wird von außerhalb des Isolators zu den Öffnungen im Filterkopf, an denen die Filterschläuche angebracht sind, geführt. Mit Hilfe dieses Rohrleitungssystems werden Druckstöße in die Filterschläuche geleitet, was eine Formänderung des Filtergewebes zur Folge hat. Durch die Formänderung wird die Produktbeladung vom Filterschlauch entfernt. Das Produkt wird über den Filterkonus zum darunter angeordnete Produktbehälter geführt. Die Abreinigung des Filtermantels wird dadurch unterstützt, dass er mit Hilfe der im Isolator installierten Handschuhe abgeklopft werde.

Die erfindungsgemäße Filtereinrichtung kann für die Reinigung im geschlossenen Isolator zerlegt werden. Zunächst wird der Filtermantel vom Filterkopf und Filterstutzen gelöst. Da der Filtermantel aus textilem Gewebe besteht, kann er zusammengerafft werden und unterhalb der Filterschläuche hindurch wegbewegt werden. Er wird durch ein geeignetes Schleusensystem aus dem Isolator entfernt. Es wird zum Zerlegen des Filters wesentlich weniger Platz benötigt als bei bekannten Filtersystemen mit starren Filtergehäuse, anstatt Filtermantel. Danach liegen die Filterschläuche frei und können ebenfalls entfernt und ausgeschleust werden. Über ein im Isolator integriertes Reinigungssystem kann nun die Reinigung starten. Zur Endreinigung und Kontrolle können Filterkonus und Filterkopf weiter zerlegt werden. Ist der Produktbehälter gefüllt, wird er vom Filter gelöst und mit einem Deckel versehen. Das Gebinde wird aus dem Isolator ausgeschleust.

Bei kleinen zu verarbeitenden Produktmengen kann ein Filtersack direkt an den Filterstutzen montiert werden um den Produktverlust zu minimieren.

Die erfindungsgemäße Filtereinheit erlaubt eine kontaminationsfreie Produktentnahme sowie kontaminationsfreie Reinigungs- und Wartungsarbeiten. Weitere Besonderheiten und Vorzüge der Erfindung ergeben sich aus dem folgenden Anwendungsbeispiel und der Zeichnung. Es zeigt:

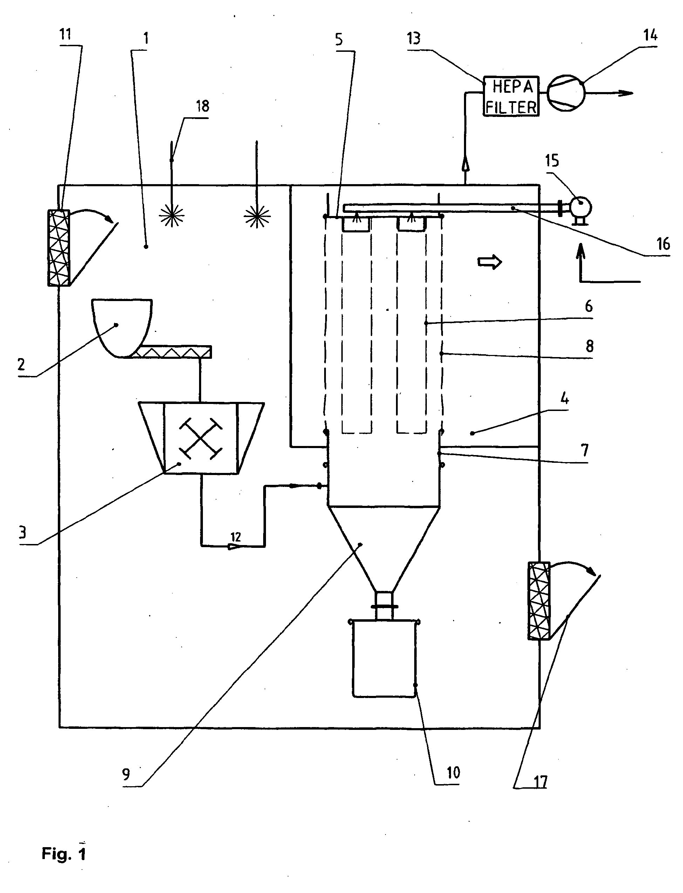

Fig. 1: Filtereinheit als Bestandteil eines Isolators

### Anwendungsbeispiel

Figur 1 zeigt den Isolator 1 mit der integrierten Filtereinheit. Im Isolator 1 ist ein Dosiersystem 2 und eine Mühle 3 sowie eine abgetrennte Filterkammer 4 mit Filter angeordnet. In der Filterkammer 4 ist der Filterkopf 5, an dem die Filterschläuche 6 mit Stützkorb befestigt sind, angeordnet. Fluchten unterhalb des Filterkopfes 5 im Boden der Filterkammer 4 ist ein Filterstutzen 7 angeordnet. Zwischen Filterkopf 5 und Filterstutzen 7, die Filterschläuche 6 umgebend, ist der Filtermantel 8 angeordnet. Der Filterkonus 9 verbindet den Filterstutzen 7 mit dem Produktbehälter 10. Anstatt des Filterkonus 9 kann zwischen Filterstutzen 7 und Produktbehälter 10 auch ein zylindrischer Stutzen angeordnet sein.

Das zu behandelnde Material wird über eine Schleuse 11 in den Isolator 1 überführt und mittels Dosiersystem 2 der Mühle 3 zudosiert. Das gemahlene Produkt wird in einem Luftstrom über die Rohrleitung 12 in die Filtereinheit aufgegeben. Der Filtereinheit nachgeschaltet ist ein Hepa-Filter 13 und ein Sauggebläse 14, so dass die Filterkammer 4 abgesaugt wird. Durch das Sauggebläse 14 wird der produktbeladene Luftstrom von außen nach innen über die Filterschläuche 6 und von innen nach außen über den Filtermantel 8 geführt, wobei sich das Produkt außen auf den Filterschläuchen 6 und innen auf dem Filtermantel 8 absetzt. Wenn der Produktkuchen eine bestimmte Dicke erreicht hat, fällt er ab. Das Abreinigen der Filterschläuche wird durch Druckstöße unterstützt. Dazu wird von der Abreinigungseinheit 15 ein Rohrsystem 16 bis über die Öffnungen der Filterschläuche 6 im Filterkopf 5 geführt. Über die Rohre werden Druckstöße in die Filterschläuche 6 gegeben, so dass sie sich verformen und das außen abgeschiedene Produkt abfällt. Der Filtermantel 8 kann durch abklopfen mit den am Isolator integierten Handschuhen (hier nicht dargestellt) abgereinigt werden. Das Produkt gelangt über den Filterkonus 9 in den Produktbehälter 10. Ist der Produktbehälter 10 voll, wird er von Filterkonus 9 gelöst und mit einem Deckel verschlossen und über ein Schleusensystem kontaminationsfrei aus dem Isolator 1 17 ausgeschleust.

Muss die Filtereinheit zerlegt und gereinigt werden, wird zunächst der Filtermantel 8 vom Filterkopf 5 und Filterstutzen 7 gelöst, er fällt in sich zusammen, da er flexibel ist und kann zwischen dem unteren Ende der Filterschläuche 6 und der oberen Kante des Filterstutzens 7 herausgezogen werden. Über eine Schleuse 17 kann er aus der Filterkammer 4 ausgeschleust werden. In einem weiteren Schritt werden die Filterschläuche 6 von Filterkopf 5 gelöst und ebenfalls ausgeschleust. Über das im Isolator 1 integrierte Reinigungssystem 18 kann nun die Reinigung des gesamten Systems erfolgen. Zur Endreinigung können Filterkonus 5 und oberer Filterstutzen 7 weiter zerlegt werden.

Durch die beschriebene Filtereinheit konnte die Filterfläche vergrößert werden und die Handhabung bei Zerlegung und Reinigung erheblich vereinfacht werden. Die Stillstandszeiten wesentlich reduziert und auch einen Produktwechsel ist wesentlich erleichtert. Sowohl Reinigung und Produktausschleusung können kontaminationsfrei durchgeführt werden.

Die Erfindung ist nicht auf das vorstehend beschriebene und in der Zeichnung dargestellte Anwendungsbeispiel beschränkt. Statt der Mühle kann ein Windsichter oder jede andere verfahrenstechnische Maschine im Isolator angeordnet sein.

### Bezugszeichen

- 1: Isolator
- 2: Dosiereinheit
- 3: Mühle
- 4: Filterkammer
- 5: Filterkopf
- 6: Filterschlauch
- 7: Filterstutzen
- 8: Filtermantel
- 9: Filterkonus
- 10: Produktbehälter
- 11: Schleuse
- 12: Rohrleitung
- 13: Hepa-Filter
- 14: Sauggebläse
- 15: Abreinigungseinheit
- 16: Rohrsystem
- 17: Schleuse
- 18: Reinigungssystem

## Patentansprüche

1. Isolator mit integral darin angeordneter Filtereinheit zum Reinigen partikelbeladener Prozessluft bestehend aus Filterkammer mit Filterkopf und Filterstutzen und mindestens einem Filterschlauch und einem Filtermantel **dadurch gekennzeichnet, dass** der mindestens eine Filterschlauch welcher am Filterkopf befestigt ist von einem zwischen Filterkopf (5) und Filterstutzen (7) angeordneten flexiblen Filtermantel (8) umgeben ist, wobei der mindestens eine Filterschlauch (6) von außen nach innen und der Filtermantel (8) von innen nach außen durchströmt wird und zwischen Filterschlauch (6) und Filtermantel (8) den Rohgasraum bildet und die Filtereinheit durch Lösen des Filtermantels und der Filterschläuche innerhalb des Isolators zerlegbar und reinigbar ist

2. Isolator mit integral darin angeordneter Filtereinheit nach Anspruch 1, **dadurch gekennzeichent, dass** der Filtermantel (8) aus textilem Gewebe besteht

3. Isolator mit integral darin angeordneter Filtereinheit nach Anspruch 1 bis 2, **dadurch gekennzeichent, dass** die Filterschläuche (6) durch Druckstöße abreinig bar sind

4. Isolator mit integral darin angeordneter Filtereinheit nach Anspruch 1 bis 3, **dadurch gekennzeichent, dass** die Filterkammer (4) über das Gebläse (14) abgesaugt,wird.

## Claims

1. Isolator with integrated filter unit to clean particle-laden process air comprising a filtration chamber with filter head and filter socket and at least one filter hose and a filter jacket, **characterised in that** the minimum of one filter hose which is secured to the filter head is surrounded by a flexible filter jacket (8) fitted between the filter head (5) and filter socket (7), whereby the air flows through the minimum of one filter hose (6) from the outside in and through the filter jacket (8) from the inside out and that the area between the filter hose (6) and filter jacket (8) constitutes the dirty gas chamber and that the filter unit can be dismantled and cleaned inside the isolator by removing the filter jacket and the filter hose(s).

2. Isolator with integrated filter unit in accordance with Claim 1, **characterised in that** the filter jacket (8) is made of a textile fabric.

3. Isolator with integrated filter unit in accordance with Claims 1 - 2, **characterised in that** the filter hoses (6) can be cleaned by means of compressed air blasts.

4. Isolator with integrated filter unit in accordance with Claims 1 - 3, **characterised in that** the filtration chamber (4) is dedusted by means of the extraction fan (14).

## Revendications

1. Un isolateur avec une unité de filtration intégrale disposée à l'intérieur pour nettoyer de l'air d'un processus chargé en particules et comprenant une chambre de filtration avec la tête du filtre et des supports de filtre et au moins une manche filtrante et une enveloppe de filtre, **caractérisé en ce que** la manche filtrante (au moins une) qui est fixée à la tête du filtre est entourée par une enveloppe du filtre flexible (8) disposée entre la tête de filtre (5) et des supports de filtre (7) de façon à ce que la manche filtrante (au moins une) (6) est traversée par le flux de l'extérieur vers l'intérieur et que l'enveloppe du filtre (8) est traversée de l'intérieur vers l'extérieur et entre la manche filtrante (6) et l'enveloppe de filtre (8) se forme l'espace de gaz brut et l'unité de filtration est démontable et nettoyable par le détachement de l'enveloppe du filtre et des manches filtrantes à l'intérieur de l'isolateur.

2. Un isolateur avec une unité de filtration intégrale disposée à l'intérieur selon la revendication 1 **caractérisé en ce que** l'enveloppe du filtre (8) est en tissus textile

3. Un isolateur avec une unité de filtration intégrale disposée à l'intérieur selon la revendication 1 à 2 **caractérisé en ce que** les manches filtrantes (6) sont nettoyables par des à-coups de pression

4. Un isolateur avec une unité de filtration intégrale disposée à l'intérieur selon la revendication 1 à 3 **caractérisé en ce que** la chambre du filtre (4) sera ventilée par le ventilateur (14).
